# EUROPEAN PATENT SPECIFICATION

(11) **EP 4 433 252 B1**
(45) Date of publication and mention of the grant of the patent: **26.08.2026**
(21) Application number: 22829649.7
(22) Date of filing: 14.11.2022
(51) Int. Cl.: B23K 26/035, B23K 26/24, B23K 26/32, B23K 26/06

(54) **IMPROVEMENT WELDING METHOD FOR LASER WELD OF BATTERY FOILS STACK AND WELDING METHOD**
VERBESSERTES SCHWEISSVERFAHREN ZUM LASERSCHWEISSEN EINES BATTERIEFOLIENSTAPELS UND SCHWEISSVERFAHREN
PROCÉDÉ DE SOUDAGE AMÉLIORÉ POUR SOUDURE LASER D'EMPILEMENT DE FEUILLES DE BATTERIE ET PROCÉDÉ DE SOUDAGE

(30) Priority: 16.11.2021 CN 202111355727
(43) Date of publication of application: 25.09.2024
(73) Proprietor: Trumpf (China) Co., Ltd., Taicang, Jiangsu 215400 (CN)
(72) Inventor: WANG, Weiyu, Nanjing Road Taicang, Jiangsu 215400 (CN); HOU, Zekai, Nanjing Road Taicang, Jiangsu 215400 (CN); LEHLEUTER, Franz, Nanjing Road Taicang, Jiangsu 215400 (CN); LIU, Yuan, Nanjing Road Taicang, Jiangsu 215400 (CN); ZHANG, Lu, Nanjing Road Taicang, Jiangsu 215400 (CN)
(74) Representative: Kohler Schmid Möbus Patentanwälte
(86) International application number: PCT/CN2022/131652
(87) International publication number: WO 2023/088204

(56) References cited:
- JP-A- 2018 111 120
- US-A1- 2018 207 751
- US-A1- 2019 194 776
- GRABMANN SOPHIE ET AL: "Laser welding of current collector foil stacks in battery production-mechanical properties of joints welded with a green high-power disk laser", THE INTERNATIONAL JOURNAL OF ADVANCED MANUFACTURING TECHNOLOGY, SPRINGER, LONDON, vol. 118, no. 7-8, 1 October 2021 (2021-10-01), pages 2571 - 2586, XP037665677, ISSN: 0268-3768, [retrieved on 20211001], DOI: 10.1007/S00170-021-07839-0

## Description

### Technical Field

The present invention relates to an improvement method for improving a welding seam, a welding method for welding multi-layer aluminum foil stack of a current collector of a battery and a part thereof, a laser processing system, a control device for a laser processing system, and a computer program product. The invention particularly relates to the fields of lithium ion battery and laser welding.

### Background Art

Due to the superiority in various aspects compared with other batteries, lithium-ion batteries are widely used in various fields.

In a lithium-ion battery, the positive electrode comprises a current collection electrode composed of lithium cobalt oxide (or nickel cobalt lithium manganate, lithium manganate, lithium iron phosphate, etc.) and aluminum foil, and the negative electrode comprises a current collection electrode composed of graphitized carbon material and copper foil. The aluminum foil is also used as a current collector of the positive electrode. A multi-layer aluminum foil stack is used here, in order to obtain a larger aluminum foil surface which can be coated with more active substances. In order to produce a battery, the multi-layer aluminum foil stack needs to be effectively connected to a pole. Since the aluminum foil is very thin, ultrasonic welding is usually preferred for the connecting. As the shape of the pole is usually irregular, a connector in sheet form was usually added between the aluminum foil stack and the pole, wherein the aluminum foil stack and the connector are first connected by ultrasonic welding, and then the connector that is less prone to welding cracks is connected to the pole by laser welding.

However, it is intended to omit the connector for the lightweight and supercharge of battery cells. Then the multi-layer aluminum foil stack should be directly welded to the pole. But the thin aluminum foil is very prone to cracking during the welding, especially at an interface edge of the melt fusion. This is mainly because: the surface of aluminum foil is often covered with an Al₂O₃ oxide layer, wherein the melting point and hardness of this oxide layer are much higher than that of aluminum foil as parent material, so that part of the oxide layer cannot be completely melted during the welding process and gathers at the welding seam edge, which increases the hardness of the welding seam edge significantly and easily leads to cracks; due to the thin thickness of the aluminum foil, the aluminum foil near the heat-affected zone of the melt pool is prone to huge deformation under the action of high temperature, and the tensile stress generated by this process will also increase the risk of melt pool cracking; temperature unevenness and material deformation caused by laser energy input during welding also increase the risk of cracking.

Furthermore, since the welding seam is elongated in the feed direction, the melt pool of the welding seam is U-shaped in a section perpendicular to the feed direction, that is, the edge profile of the melt pool is very steep, so the aluminum foil at the edge of the melt pool is seriously deformed and the resulting tensile stress easily leads to continuous cracking at the fusion edge of the melt pool.

JP2018111120A discloses a determination method of laser welding when a molten pool as to reach the back side of a weld zone is not formed upon the laser welding of an electrode body and a current collector. In order to eliminate a blow hole, a bead formed on an end portion of the electrode body once again solidified is irradiated again with laser light to remelt the bead.

### Summary of the Disclosure

It is an object of the present invention to provide an improvement method for improving a welding seam so that cracks can be reduced and a high-strength, high-quality welding seam can be provided in the case of welding a multi-layer aluminum foil stack.

According to a first aspect of the present invention, there is provided an improvement method for improving a welding seam formed by welding a multi-layer aluminum foil stack of a current collector of a battery and a part thereof, wherein the improvement method at least comprises a remelting step, in which a welding seam edge of the welding seam on a surface of the multi-layer aluminum foil stack is remelted at least once by a laser beam with a heat input that is lower than the heat input for forming the welding seam.

In this context, a "part" is to be understood in particular as any component of a battery that is to be welded together with the multi-layer aluminum foil stack. A "welding seam" is to be understood in particular as any form of welding seam formed by welding a multi-layer aluminum foil stack to the part by means of a laser beam, especially a primary welding seam formed in a conventional manner. It is conceivable that the welding seam is formed by a linear or curved track or the like of the laser beam on the multi-layer aluminum foil stack. A "welding seam edge of a welding seam on a surface of the multi-layer aluminum foil stack" is understood in particular as a contour line of the welding seam on the surface of the multi-layer aluminum foil stack or a boundary line between the welding seam and the aluminum foil as parent material of or a weld toe of the welding seam. The welding seam edge particularly delimits the width of the welding seam. A "width of a welding seam" is understood in particular as a width of the welding seam transverse to a feed direction of a laser beam. After each remelting, especially a new welding seam edge is produced on the surface of the multi-layer aluminum foil stack. Here, the term "welding seam edge" in particular always refers to boundary lines between the welding seam and the aluminum foil as parent material, rather than lines within the welding seam that result from remelting. The feature "a welding seam edge of the welding seam on the surface of the multi-layer aluminum foil stack is remelted" covers in particular a remelting of at least a portion of two welding seam edges of the welding seam, in particular a complete remelting of the two welding seam edges. It should be understood that when a welding seam edge is remelted, the melt pool produced by the laser beam is, for example, wider than the welding seam edge, whereby the area near the welding seam edge is also melted at the same time. Furthermore, it should be understood that after the remelting, the melted area solidifies and thus a new welding seam edge is formed.

According to the present invention, in the remelting step, a welding seam edge of the welding seam on the surface of the multi-layer aluminum foil stack is remelted multiple times by the laser beam, wherein the heat input used for a first remelting is lower than that used for forming the welding seam, and the heat input used for each remelting after the first remelting decreases compared with the remelting of the last time, and in each remelting, a welding seam edge formed by the remelting of the last time is remelted. The expression "multiple times" is understood in particular as "at least twice". Each remelting involves in particular two welding seam edges of the welding seam on the surface of the multi-layer aluminum foil stack.

According to an optional embodiment of the present invention, in the remelting step, the laser beam is moved relative to the multi-layer aluminum foil stack along a welding seam edge or parallel to a welding seam edge in the vicinity thereof. Obviously, it is not mandatory that the focal spot of the laser beam must be along the welding seam edge, but it is sufficient that the welding seam edge is within the melt pool of the laser beam.

According to an optional embodiment of the present invention, to achieve the lower heat input in the remelting step, a laser power of the laser beam is reduced compared with that for forming the welding seam and/or a moving speed of the laser beam relative to the multi-layer aluminum foil stack is accelerated compared to that for forming the welding seam and/or the surface is a top surface of the multi-layer aluminum foil stack facing the laser beam, and wherein the part is under a lower surface of the multi-layer aluminum foil stack facing away from the laser beam.

According to the present invention, the welding seam edge formed by each remelting is offset from the welding seam edge formed by the remelting of the last time in a direction away from the welding seam.

According to an optional embodiment of the present invention, the lengths of the welding seam edges formed by individual remeltings are equal to each other. Here, "equal" should be understood in particular to cover "absolutely equal" and "substantially equal", and "substantially equal" in particular means to comprise a deviation within ±10%, in particular within ±5%.

According to an optional embodiment of the present invention, the depth of a melt pool in each remelting decreases with the increase of the number of remeltings and is smaller than the thickness of the multi-layer aluminum foil stack.

According to an optional embodiment of the present invention, the total number of remeltings is selected so that the welding seam meets the requirements in terms of cracks.

According to an optional embodiment of the present invention, the battery is a lithium ion battery.

According to an optional embodiment of the present invention, the part is a positive pole of the battery.

According to a second aspect of the present invention, there is provided a welding method for welding a multi-layer aluminum foil stack of a current collector of a battery and a part thereof, wherein the welding method comprises: a primary welding step, in which the multi-layer aluminum foil stack and the part are welded by a laser beam, thereby forming a welding seam; and an improvement step, in which the above-described improvement method is implemented for the welding seam.

According to an optional embodiment of the present invention, in the primary welding step, the welding seam is formed by a linear or curved track of the laser beam on a surface of the multi-layer aluminum foil stack.

According to an optional embodiment of the present invention, the welding method is performed by means of a scanning optic or a fixed welding head. The fixed welding head especially refers to a welding head in which the laser beam does not move relative to the welding head.

According to an optional embodiment of the present invention, prior to the welding method, aluminum foils of the multi-layer aluminum foil stack were pre-welded together by ultrasonic.

The positive effects of the present invention are that: by remelting the fusion edge of an primary welding seam with a low power, the internal stress in a fusion edge area of a newly generated welding seam during the solidification process can be reduced, thereby reducing cracks in the fusion edge area; by repeating the remelting, the length of the cracks can be reduced and the cracks become discontinuous due to the continuous reduction in weld energy.

### Brief Description of the Drawings

The principles, features and advantages of the present invention may be better understood by describing the present invention in more detail below with reference to the accompanying drawings. The drawings comprise:
FIG. 1 schematically shows an example of a battery in a partial sectional view.
FIG. 2 schematically shows an example of a laser machining system in a perspective view.
FIG. 3 schematically shows an example of a welding seam and an area of the welding seam prone to cracks in a top view.
FIG. 4 schematically shows a cross-section of the melt pool of the welding seam from FIG. 3.
FIG. 5 schematically shows a welding seam and an example of improving the welding seam according to the present invention in a top view.
FIG. 6 schematically shows a cross-section of the melt pool of the welding seam from FIG. 5.

### Detailed Description of Preferred Embodiments

In order to make the technical problems to be solved by the present invention, the technical solutions and beneficial technical effects clearer, the present invention will be further described in detail below with reference to the accompanying drawings and a plurality of exemplary embodiments. It should be understood that the specific embodiments described herein are only used to explain the present invention, rather than to limit the scope of protection of the present invention.

First of all, it should be pointed out that, for the sake of clarity and conciseness of the drawings, only one of the welding seam edges, the cracks or the welding seam edges formed by remelting and the like of the welding seam is marked with reference sign.

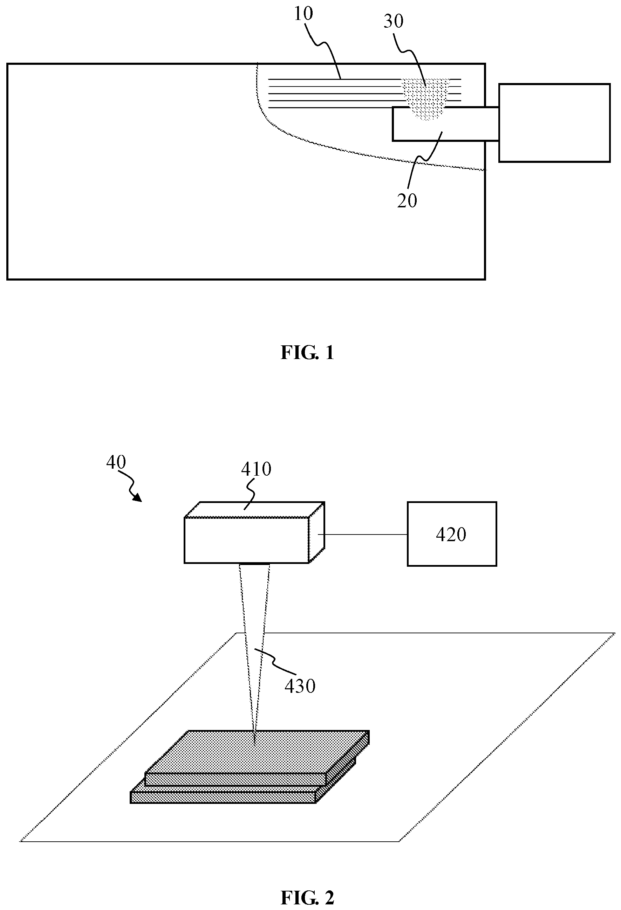

FIG. 1 schematically shows an example of a battery in a partial sectional view. Here, the battery is by way of example a lithium ion battery. However, it is obvious that the idea of the present invention is not limited to lithium-ion batteries only and can also be applied to other types of batteries, such as sodium-ion batteries. Moreover, the idea of the present invention is not limited to battery with square shell, but is also applicable to pouch battery, cylindrical battery and batteries in other form with a similar welding seam. The cell of the lithium ion battery is formed by, for example, a multi-layer stack structure, wherein a separator is provided between each aluminum foil and copper foil in the multi-layer stack structure, wherein further substances required for the manufacture of the battery are interposed between these layers. This is well known to those skilled in the art and will not be described in detail. These aluminum foil layers protrude at one end of the cell and are pre-welded by ultrasonic to form a current collector of the positive electrode. The multi-layer aluminum foil stack 10 of the current collector of the positive electrode comprises, for example, 20 to 130 aluminum foil layers. The positive electrode of the battery also comprises, for example, a positive pole, a positive tab, and the like. The current collector of the positive electrode generally needs to be connected to the positive pole, and may also need to be connected to the positive tab or other components of the battery in some cases. Such a connection is usually achieved by welding, wherein, for example, the multi-layer aluminum foil stack 10 and the part 20, such as the positive pole, under the lowermost aluminum foil layer of the multi-layer aluminum foil stack 10 need to be welded by a laser beam 430 to form a welding seam 30.

FIG. 2 schematically shows an example of a laser machining system 40 in a perspective view. For example, the laser processing system 40 is used to weld and/or improve the welding seam 30 of FIG. 1. For example, the laser processing system 40 comprises a laser device 410 for generating a laser beam 430 and a control device 420 at least for controlling the laser device 410. The laser processing system 40 may further comprise a support table (shown schematically as a plane in FIG. 2) for supporting objects (i.e., the multi-layer aluminum foil stack 10 and the part 20) to be welded and/or a fixture for holding the objects to be welded, and the like. The support table and/or the fixture may be fixed or movable. The control device 420 may also control the movement of the support table and/or the fixture if necessary. The laser device 410 may comprise, for example, a scanning optic or a fixed welding head.

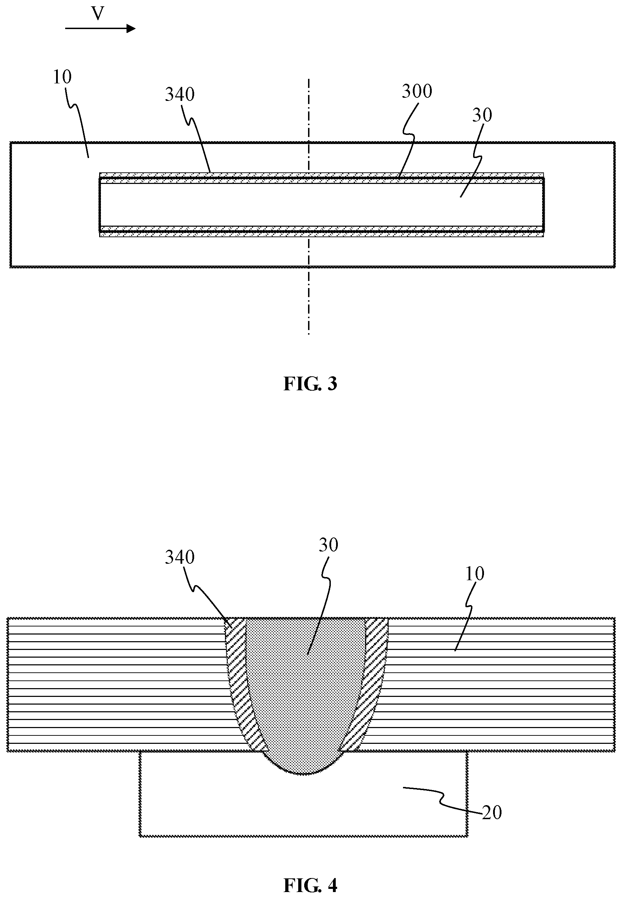

When the multi-layer aluminum foil stack 10 of the current collector of the battery shown in FIG. 1 is welded, a welding seam 30 shown in FIG. 3 is typically employed. The welding seam 30 is shown schematically here in a top view. The length-width ratio here is for clarity only, and in practice the width may be much smaller than the length. The length of the welding seam 30 is, for example, 20 mm to 60 mm, and the width is, for example, 2 mm to 6 mm. The welding seam 30 is here for example elongated. In order to form such a welding seam 30, the laser beam 430 generally travels a linear track relative to the multi-layer aluminum foil stack 10. However, it is also conceivable here to use other tracks depending on the shape and size of the weldable area. For example, the laser beam 430 can perform, in addition to a linear feed movement in the feed direction, also an oscillatory movement with a narrow amplitude transverse to the feed direction. The feeding direction of the laser beam 430 is indicated by an arrow and a symbol V in FIG. 3. In FIG. 3, the area 340 prone to cracks on the welding seam 30 (i.e., an area near the primary welding seam edge 300) is shown in oblique hatching lines. The welding seam 30 has two primary welding seam edges 300, but only one of them is marked with reference sign for the sake of clarity and conciseness of the drawings. FIG. 4 schematically shows a cross-section of the melt pool of the welding seam 30 from FIG. 3, where the area 340 prone to cracks is also shown in oblique hatching lines. The cross-section of FIG. 4 is schematically shown in dashed-dotted lines in FIG. 3.

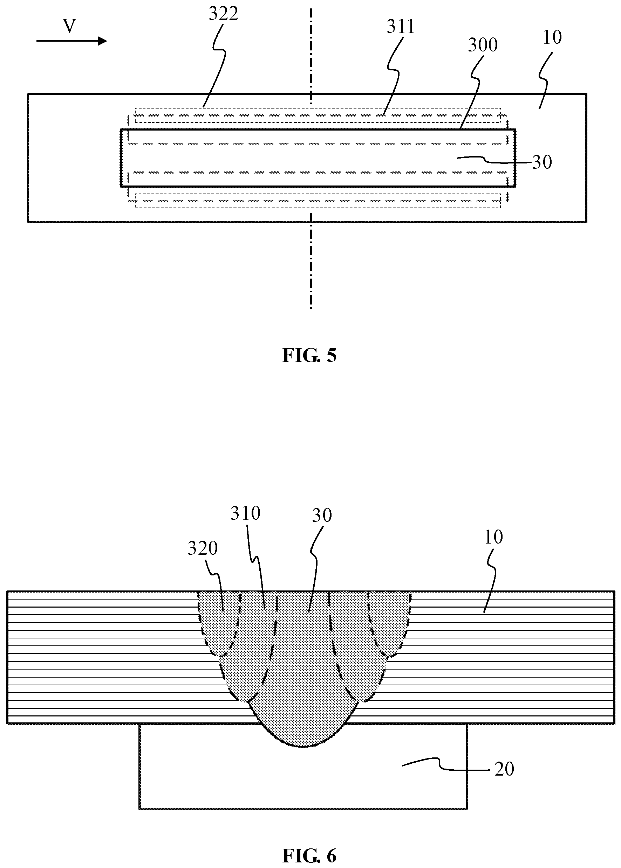

FIG. 5 schematically shows a welding seam 30 and an example of improving the welding seam 30 according to the present invention in a top view. The improvement method for improving the welding seam 30 is carried out, for example, by the laser processing system 40 of FIG. 2. The improvement method for improving the welding seam 30 comprises at least a remelting step. In the remelting step, a welding seam edge of the welding seam 30 on a surface of the multi-layer aluminum foil stack 10 is remelted at least once by a laser beam 430 with a heat input that is lower than the heat input for forming the welding seam 30. The primary welding seam 30 may also be formed by the laser processing system 40 performing the improvement method. In this case, the laser processing system 40 performs a welding method for welding a multi-layer aluminum foil stack 10 of a current collector of a battery with the part 20 thereof. The welding method comprises a primary welding step and an improvement step. First, in the primary welding step, the multi-layer aluminum foil stack 10 and the part 20 are welded by a laser beam 430, thereby forming a welding seam 30. With regard to the primary welding seam 30 in FIG. 5, reference may be made in particular to the description of the primary welding seam 30 of FIGS. 3 and 4. Then in the improvement step, the above-described improvement method for improving the welding seam 30 is carried out. Here, the welding method is performed, for example, by means of a scanning optic or a fixed welding head. However, the primary welding step and the improvement step may also be performed by different laser processing systems 40. In this case, the two laser processing systems 40 may be located in different factories.

Here, the improvement method or the welding method of the present invention is implemented, for example, with the control device 420 of FIG. 2, in which for example a corresponding computer program product is present, wherein the computer program product comprises computer program instructions that, when executed by a processor, control the laser processing system 40 of FIG. 2 to implement the improvement method or the welding method.

According to an optional embodiment of the present invention, to achieve the lower heat input in the remelting step, a laser power of the laser beam 430 is reduced compared with that for forming the welding seam 30 and/or a moving speed of the laser beam 430 relative to the multi-layer aluminum foil stack 10 is accelerated compared to that for forming the welding seam 30.

According to an exemplary embodiment of the present invention, the laser power used for remelting is between 5% and 50% of the laser power used for welding. Compared with primary welding, further parameters of the laser beam 430 other than power used for remelting, such as focal spot diameter, feed speed, etc., may remain unchanged, but may also undergo changes. Furthermore, parameters of the laser beam 430 may also be changed during each remelting. For example, the rear section of the welding seam 30 along the length direction may have more cracks due to heat accumulation effects, so different laser beam parameters may be used for the rear section than the front section of the welding seam edge in each remelting.

According to an exemplary embodiment of the present invention, in the remelting step, a welding seam edge of the welding seam 30 on the surface of the multi-layer aluminum foil stack 10 is remelted multiple times by the laser beam 430, wherein the heat input used for a first remelting is lower than that used for forming the welding seam 30, and the heat input used for each remelting after the first remelting decreases compared with the remelting of the last time, and in each remelting, a welding seam edge formed by the remelting of the last time is remelted. In particular, each remelting is performed at least after the melt pool of the remelting of the last time has solidified. FIG. 5 shows that the welding seam edge was remelted twice. Here, the primary welding seam 30 is represented by a thick black solid line, the first remelting is represented by a thin dashed line, and the second remelting is represented by a thinner dashed line. A primary welding seam edge 300, a welding seam edge 311 formed by the first remelting, and a welding seam edge 322 formed by the second remelting are marked with reference signs here. FIG. 6 schematically shows a cross-section of the melt pool of the welding seam 30 from FIG. 5, wherein the cross-section is shown schematically in dashed-dotted lines in FIG. 5. The primary welding seam 30, a melt pool 310 during the first remelting and a melt pool 320 during second remelting are marked with reference signs here. It should be understood that they overlap each other.

According to an exemplary embodiment of the present invention, in the remelting step, the laser beam 430 is moved relative to the multi-layer aluminum foil stack 10 along the welding seam edge or parallel to the welding seam edge in the vicinity thereof. However, further tracks of the laser beam 430 on the surface of the multi-layer aluminum foil stack 10 for remelting are also conceivable, such as a track with an additional transverse oscillatory movement, etc.

According to an exemplary embodiment of the present invention, the welding seam edge formed by each remelting is offset from the welding seam edge formed by the remelting of the last time in a direction away from the welding seam 30. As shown in FIG. 5, the welding seam edge 322 formed by the second remelting is offset from the welding seam edge 311 formed by the first remelting in a direction away from the welding seam 30. This can also be regarded as a continuous widening of the welding seam 30. However, it is also conceivable that a welding seam edge formed by remelting is identical to the primary welding seam edge 300, that is, the width of the welding seam 30 remain constant.

According to an exemplary embodiment of the present invention, the lengths of the welding seam edges formed by individual remeltings are equal to each other. However, it is also conceivable that each remelting results in a slightly shorter (see FIG. 5) or slightly longer welding seam edge than the remelting of the last time, etc.

According to an exemplary embodiment of the present invention, as shown in FIG. 6, the depth of a melt pool in each remelting decreases with the increase of the number of remeltings and is smaller than the thickness of the multi-layer aluminum foil stack 10.

According to an exemplary embodiment of the present invention, the total number of remeltings is selected so that the welding seam 30 meets the requirements in terms of cracks.

Although specific embodiments of the present invention are described in detail herein, they are presented for purposes of explanation only and should not be considered as limiting the scope of the present invention. Various substitutions, alterations and modifications may be conceived without departing from the scope of the present invention, as defined by the appended claims.

## Claims

1. An improvement method for improving a welding seam (30) formed by welding a multi-layer aluminum foil stack (10) of a current collector of a battery and a part (20) thereof, wherein the improvement method at least comprises
a remelting step, in which a welding seam edge of the welding seam (30) on a surface of the multi-layer aluminum foil stack (10) is remelted at least once by a laser beam (430) with a heat input that is lower than the heat input for forming the welding seam (30), **characterized in that**,
in the remelting step, a welding seam edge of the welding seam (30) on the surface of the multi-layer aluminum foil stack (10) is remelted multiple times by the laser beam (430), wherein the heat input used for a first remelting is lower than that used for forming the welding seam (30), and the heat input used for each remelting after the first remelting decreases compared with the remelting of the last time, and in each remelting, a welding seam edge formed by the remelting of the last time is remelted,
the welding seam edge formed by each remelting is offset from the welding seam edge formed by the remelting of the last time in a direction away from the welding seam (30).

2. The improvement method according to claim **1,** wherein:
in the remelting step, the laser beam (430) is moved relative to the multi-layer aluminum foil stack (10) along a welding seam edge or parallel to a welding seam edge in the vicinity thereof; and/or
to achieve the lower heat input in the remelting step, a laser power of the laser beam (430) is reduced compared with that for forming the welding seam (30) and/or a moving speed of the laser beam (430) relative to the multi-layer aluminum foil stack (10) is accelerated compared to that for forming the welding seam (30); and/or
the surface is a top surface of the multi-layer aluminum foil stack (10) facing the laser beam (430), and wherein the part (20) is under a lower surface of the multi-layer aluminum foil stack (10) facing away from the laser beam (430).

3. The improvement method according to claim 2, wherein:
the lengths of the welding seam edges formed by individual remeltings are equal to each other; and/or
the depth of a melt pool in each remelting decreases with the increase of the number of remeltings and is smaller than the thickness of the multi-layer aluminum foil stack (10); and/or
the total number of remeltings is selected so that the welding seam (30) meets the requirements in terms of cracks.

4. The improvement method according to any one of claims 1-3, wherein:
the battery is a lithium ion battery; and/or
the part (20) is a positive pole of the battery.

5. A welding method for welding a multi-layer aluminum foil stack (10) of a current collector of a battery and a part (20) thereof, wherein the welding method comprises:
a primary welding step, in which the multi-layer aluminum foil stack (10) and the part (20) are welded by a laser beam (430), thereby forming a welding seam (30);
an improvement step, in which an improvement method according to any one of claims 1-4 is implemented for the welding seam (30).

6. The welding method according to claim 5, wherein:
in the primary welding step, the welding seam (30) is formed by a linear or curved track of the laser beam (430) on a surface of the multi-layer aluminum foil stack (10).

7. The welding method according to claim 5 or 6, wherein:
the welding method is performed by means of a scanning optic or a fixed welding head; and/or
prior to the welding method, aluminum foils of the multi-layer aluminum foil stack (10) were pre-welded together by ultrasonic.

## Patentansprüche

1. Verbesserungsverfahren zum Verbessern einer Schweißnaht (30), die durch Schweißen eines mehrschichtigen Aluminiumfolienstapels (10) eines Stromkollektors einer Batterie und eines Teils (20) davon gebildet wird, wobei das Verbesserungsverfahren mindestens Folgendes umfasst:
einen Umschmelzschritt, bei dem eine Schweißnahtkante der Schweißnaht (30) auf einer Oberfläche des mehrschichtigen Aluminiumfolienstapels (10) mindestens einmal durch einen Laserstrahl (430) mit einem Wärmeeintrag umgeschmolzen wird, der geringer ist als der Wärmeeintrag zum Bilden der Schweißnaht (30),
**dadurch gekennzeichnet, dass**
bei dem Umschmelzschritt eine Schweißnahtkante der Schweißnaht (30) auf der Oberfläche des mehrschichtigen Aluminiumfolienstapels (10) mehrfach durch den Laserstrahl (430) umgeschmolzen wird, wobei der für einen ersten Umschmelzvorgang verwendete Wärmeeintrag geringer ist als der zur Bildung der Schweißnaht (30) verwendete Wärmeeintrag, und der für jeden Umschmelzvorgang nach dem ersten Umschmelzvorgang verwendete Wärmeeintrag im Vergleich zum vorherigen Umschmelzvorgang abnimmt, und bei jedem Umschmelzvorgang eine durch den vorherigen Umschmelzvorgang gebildete Schweißnahtkante umgeschmolzen wird,
wobei die durch jeden Umschmelzvorgang gebildete Schweißnahtkante gegenüber der durch den vorherigen Umschmelzvorgang gebildeten Schweißnahtkante in einer Richtung von der Schweißnaht (30) weg versetzt ist.

2. Verbesserungsverfahren nach Anspruch 1, wobei:
bei dem Umschmelzschritt der Laserstrahl (430) relativ zum mehrschichtigen Aluminiumfolienstapel (10) entlang einer Schweißnahtkante oder parallel zu einer Schweißnahtkante in deren Nähe bewegt wird; und/oder
um bei dem Umschmelzschritt den geringeren Wärmeeintrag zu erzielen, eine Laserleistung des Laserstrahls (430) im Vergleich zu der zum Bilden der Schweißnaht (30) verwendeten Laserleistung reduziert wird und/oder eine Bewegungsgeschwindigkeit des Laserstrahls (430) relativ zu dem mehrschichtigen Aluminiumfolienstapel (10) im Vergleich zu der zum Bilden der Schweißnaht (30) verwendeten Bewegungsgeschwindigkeit beschleunigt wird, und/oder die Oberfläche eine obere Fläche des mehrschichtigen Aluminiumfolienstapels (10) ist, die dem Laserstrahl (430) zugewandt ist und wobei das Teil (20) sich unter einer unteren Fläche des mehrschichtigen Aluminiumfolienstapels (10) befindet, die dem Laserstrahl (430) abgewandt ist.

3. Verbesserungsverfahren nach Anspruch 2, wobei:
die Längen der durch einzelne Umschmelzvorgänge gebildeten Schweißnahtkanten einander gleich sind; und/oder
die Tiefe eines Schmelzbades bei jedem Umschmelzvorgang mit zunehmender Anzahl der Umschmelzvorgänge abnimmt und kleiner ist als die Dicke des mehrschichtigen Aluminiumfolienstapels (10); und/oder
die Gesamtzahl der Umschmelzvorgänge so gewählt wird, dass die Schweißnaht (30) die Anforderungen hinsichtlich Rissen erfüllt.

4. Verbesserungsverfahren nach einem der Ansprüche 1 bis 3, wobei:
die Batterie eine Lithium-Ionen-Batterie ist; und/oder das Teil (20) ein Pluspol der Batterie ist.

5. Schweißverfahren zum Schweißen eines mehrschichtigen Aluminiumfolienstapels (10) eines Stromkollektors einer Batterie und eines Teils (20) davon, wobei das Schweißverfahren umfasst:
einen primären Schweißschritt, bei dem der mehrschichtige Aluminiumfolienstapel (10) und das Teil (20) mittels eines Laserstrahls (430) geschweißt werden, wodurch eine Schweißnaht (30) gebildet wird;
einen Verbesserungsschritt, bei dem ein Verbesserungsverfahren nach einem der Ansprüche 1 bis 4 für die Schweißnaht (30) durchgeführt wird.

6. Schweißverfahren nach Anspruch 5, wobei:
bei dem primären Schweißschritt die Schweißnaht (30) durch eine lineare oder gekrümmte Bahn des Laserstrahls (430) auf einer Oberfläche des mehrschichtigen Aluminiumfolienstapels (10) gebildet wird.

7. Schweißverfahren nach Anspruch 5 oder 6, wobei:
das Schweißverfahren mittels einer Scanneroptik oder eines feststehenden Schweißkopfes durchgeführt wird; und/oder
vor dem Schweißverfahren Aluminiumfolien des mehrschichtigen Aluminiumfolienstapels (10) mittels Ultraschall vorgeschweißt wurden.

## Revendications

1. Procédé d'amélioration pour améliorer un cordon de soudure (30) formé par soudage d'un empilement de feuilles d'aluminium multicouches (10) d'un collecteur de courant d'une batterie et d'une partie (20) de celui-ci, lequel procédé d'amélioration comprend au moins
une étape de re-fusion, dans laquelle un bord du cordon de soudure du cordon de soudure (30) sur une surface de l'empilement de feuilles d'aluminium multicouches (10) est re-fondu au moins une fois par un faisceau laser (430) avec un apport de chaleur qui est inférieur à l'apport de chaleur pour former le cordon de soudure (30), **caractérisé en ce que**,
dans l'étape de re-fusion, un bord du cordon de soudure du cordon de soudure (30) sur la surface de l'empilement de feuilles d'aluminium multicouches (10) est re-fondu plusieurs fois par le faisceau laser (430), dans lequel l'apport de chaleur utilisé pour une première re-fusion est inférieur à celui utilisé pour former le cordon de soudure (30), et l'apport de chaleur utilisé pour chaque re-fusion après la première re-fusion diminue par rapport à la re-fusion de la fois précédente, et à chaque re-fusion, un bord du cordon de soudure formé par la re-fusion de la fois précédente est re-fondu,
le bord du cordon de soudure formé par chaque re-fusion est décalé par rapport au bord du cordon de soudure formé par la re-fusion de la fois précédente dans une direction éloignée du cordon de soudure (30).

2. Procédé d'amélioration selon la revendication 1, dans lequel :
dans l'étape de re-fusion, le faisceau laser (430) est déplacé par rapport à l'empilement de feuilles d'aluminium multicouches (10) le long d'un bord du cordon de soudure ou parallèlement à un bord du cordon de soudure à proximité de celui-ci ; et/ou
pour obtenir l'apport de chaleur inférieur dans l'étape de re-fusion, une puissance laser du faisceau laser (430) est réduite par rapport à celle pour former le cordon de soudure (30) et/ou une vitesse de déplacement du faisceau laser (430) par rapport à l'empilement de feuilles d'aluminium multicouches (10) est accélérée par rapport à celle pour former le cordon de soudure (30) ; et/ou
la surface est une surface supérieure de l'empilement de feuilles d'aluminium multicouches (10) faisant face au faisceau laser (430), et dans lequel la partie (20) est sous une surface inférieure de l'empilement de feuilles d'aluminium multicouches (10) faisant face à l'opposé du faisceau laser (430).

3. Procédé d'amélioration selon la revendication 2, dans lequel :
les longueurs des bords du cordon de soudure formés par chaque re-fusion sont égales entre elles ; et/ou
la profondeur d'un bain de fusion dans chaque re-fusion diminue avec l'augmentation du nombre de re-fusions et est inférieure à l'épaisseur de l'empilement de feuilles d'aluminium multicouches (10) ; et/ou
le nombre total de re-fusions est choisi de sorte que le cordon de soudure (30) réponde aux exigences en termes de fissures.

4. Procédé d'amélioration selon l'une quelconque des revendications 1 à 3, dans lequel :
la batterie est une batterie au lithium-ion ; et/ou
la partie (20) est un pôle positif de la batterie.

5. Procédé de soudage pour souder un empilement de feuilles d'aluminium multicouches (10) d'un collecteur de courant d'une batterie et une partie (20) de celui-ci, dans lequel le procédé de soudage comprend :
une étape de soudage primaire, dans laquelle l'empilement de feuilles d'aluminium multicouches (10) et la partie (20) sont soudés par un faisceau laser (430), formant ainsi un cordon de soudure (30) ;
une étape d'amélioration, dans laquelle un procédé d'amélioration selon l'une quelconque des revendications 1 à 4 est mis en œuvre pour le cordon de soudure (30).

6. Procédé de soudage selon la revendication 5, dans lequel :
dans l'étape de soudage primaire, le cordon de soudure (30) est formé par une trajectoire linéaire ou courbe du faisceau laser (430) sur une surface de l'empilement de feuilles d'aluminium multicouches (10).

7. Procédé de soudage selon la revendication 5 ou 6, dans lequel :
le procédé de soudage est réalisé au moyen d'une optique de balayage ou d'une tête de soudage fixe ; et/ou
avant le procédé de soudage, les feuilles d'aluminium de l'empilement de feuilles d'aluminium multicouches (10) ont été pré-soudées ensemble par ultrason.
